# EUROPÄISCHE PATENTSCHRIFT

(11) **EP 1 121 538 B1**
(45) Veröffentlichungstag und Bekanntmachung des Hinweises auf die Patenterteilung: **10.10.2007**
(21) Anmeldenummer: 00956480.8
(22) Anmeldetag: 23.08.2000
(51) Int. Cl.: F16D 3/41

(54) **GELENKGABEL, MIT EINER STÜTZFLÄCHE ZUR REALISIERUNG EINER GLEICHMÄSSIGEN LASTVERTEILUNG UND LAGERANORDNUNG**
ARTICULATED YOKE, WITH A SUPPORTING SURFACE ENABLING AN EVEN DISTRIBUTION AND BEARING ARRANGEMENT
FOURCHE D'ARTICULATION, AVEC UNE SURFACE D'APPUI PERMETTANT D'OBTENIR UNE REPARTITION DE CHARGE UNIFORME, ET DISPOSITIF SUPPORT Y RELATIF

(30) Priorität: 25.08.1999 DE 29914893 U; 09.11.1999 DE 19953963
(43) Veröffentlichungstag der Anmeldung: 08.08.2001
(73) Patentinhaber: Voith Turbo GmbH & Co. KG, 89522 Heidenheim (DE)
(72) Erfinder: LINDENTHAL, Hans, D-89522 Heidenheim (DE); GRAWENHOF, Peter, D-89168 Niederstotzingen (DE)
(74) Vertreter: Dr. Weitzel & Partner
(86) Internationale Anmeldenummer: PCT/EP2000/008232
(87) Internationale Veröffentlichungsnummer: WO 2001/014757

(56) Entgegenhaltungen:
- DE-A- 3 605 746
- US-A- 4 412 827
- US-A- 4 575 361
- US-A- 4 880 405

## Beschreibung

Die Erfindung betrifft eine Gelenkgabel mit einer Stützfläche zur Realisierung einer gleichmäßigen Lastverteilung auf die Wälzkörper einer Lageranordnung für Zapfen von Zapfenkreuzen in einer Gelenkgabel und-eine Lageranordnung zur Lagerung-eines Zapfens in einer Gelenkgabel.

Gelenkgabeln für den Einsatz in Gelenkwellen dienen der Kopplung zwischen einem antriebseitigen Maschinenelement und einem abtriebseitigem Maschinenelement. Zu diesem Zweck weisen diese wenigstens einen Fußteil, welcher mit dem an- oder abtriebseitigem Maschinenelement koppelbar ist und Lagerteile zur Abstützung der Zapfen eines zur Drehmomentenübertragung verwendeten Zapfenkreuzes auf. Die Gelenkgabel kann dabei einteilig oder mehrteilig, vorzugsweise zweiteilig in Form von zwei Gelenkgabelhälften, umfassend jeweils einen Fußteil und einen Lagerteil, ausgeführt sein. Lagerungen für Zapfen von Zapfenkreuzen in der Gelenkgabel, beziehungsweise den einzelnen Gelenkgabelhälften sind in einer Vielzahl von Ausführungen für eine Vielzahl von Einsatzbeispielen bekannt. Stellvertretend wird dazu auf die nachfolgend genannten Druckschriften verwiesen:
1. Sonderdruck VOITH Forschung und Konstruktion, Heft 33, (1989, Aufsatz 10: "Entwicklung wälzgelagerter Gelenkwellen für die Hauptantriebe schwerer Walzgerüste")
2. DE 35 44 253 C1
3. DE 34 46 495 C2

Diese Druckschriften offenbaren Ausführungen von Kreuzgelenkanordnungen für Gelenkwellen, bei welcher zur Anwendung des Zapfenkreuzes in der Gelenkgabel die dafür vorgesehene Lageranordnung wenigstens ein Radiallager und vorzugsweise zusätzlich auch ein Axiallager umfassen. Das Radiallager ist dabei als Wälzlager ausgeführt und umfaßt wenigstens einen Innen- und einen Außenring, wobei diese jeweils die Laufbahnen für die Wälzkörper bilden. Die Problematik dieser Lageranordnungen für die Zapfen von Zapfenkreuzen von Gelenkwellen besteht dabei im wesentlichen darin, daß die einzelnen Wälzlager durch hohe Drehmomentstöße und gleichzeitig Querbeschleunigungen beansprucht werden. Die stoßartigen Belastungen bei großen und sich rasch verändernden Beugewinkeln verursachen dabei elastische Verformungen in der Gelenkgabel sowohl im Bereich der Fuß- bzw. Anschlußteile, als auch innerhalb der Lagerbohrung des Lagerteiles. Die Bohrung weitet sich auf und nimmt in der Regel eine unrunde Form an. Die größte Verformung am Zapfenkreuz verursacht jedoch die Einleitung der Umfangskraft. Ihre Richtung oszilliert mit dem positiven oder negativen Wert des Betriebsbeugewinkels und wechselt außerdem mit jedem Reversiervorgang. Diese betriebs- sowie konstruktionsbedingten Einflüsse ergeben Fluchtungsfehler mit einer ungünstigen Lasteinleitung in die Lager, nämlich einen Mittenversatz der Lagerbohrung/Schrägstellung der Lagerbohrung, Durchbiegung des Zapfens, ein Radialspiel im Wälzlager und die Einfederung des Wälzlagers. Diese Problematik kommt besonders bei einer relativ starren Lagerumgebung in der Gelenkgabel und beim Einsatz in schweren Gelenkwellen zum Tragen. Die Folge davon ist eine ungleichmäßige radiale Druckverteilung in der Lagerbohrung, welche von einer Linien- zur Punktberührung an den Kontaktstellen der Wälzkörper des Radiallagers und zu überhöhten Kantenspannungen führt.

Die größte Verformung während des Betriebes beim Einsatz in Gelenkwellen erfolgt im Bereich der Wurzeln der einzelnen Zapfen eines Zapfenkreuzes, da hier die Krümmung der Biegelinie analog dem Biegemoment am größten ist.

Für das Radiallager ergibt sich dabei unter dem Einfluss der Umfangskraft eine erhöhte Beanspruchung der Wälzkörper in Umfangsrichtung im Bereich der Lagerbohrung, was erhöhte Kantenspannungen in einem Segment des Radiallagers bedingt, während am gegenüberliegenden Segment ein Abheben der Rollen zu beobachten ist. Dies führt zu einer drastischen Tragzahlminderung.

Das ungleichmäßige Tragverhalten führt des weiteren auch zu einer ungleichmäßigen Belastung der einzelnen Elemente der Lageranordnung, insbesondere der Laufbahnen. Diese ist durch Materialabtrag im Bereich der hoch beanspruchten Stellen charakterisiert. Um diesen zu vermeiden, wurden daher bisher die Laufbahnen einer entsprechenden Oberflächenbehandlung unterzogen, welche die negativen Einflüsse einer ungleichen Lasteinleitung weitestgehend vermeiden sollen. Diese Lösung ist jedoch sehr kostenintensiv. Des weiteren erlaubt eine derartige Lösung nur bedingt die Verwendung standardisierter Lageranordnungen für Gelenkwellen.

Zur Verhinderung der Tragzahlminderung schlagen die einzelnen Ausführungen der oben genannten Druckschriften Lösungen vor, welche bei der konstruktiven Ausführung, insbesondere der Auslegung der einzelnen Bauelemente, immer auf die möglicherweise auftretenden Verformungswege abstellen, um mit einer eigentlich gewünschten steifen Lageranschlusskonstruktion ein gutes Tragbild und damit eine hohe Lebensdauer der Lager zu erzielen. Derartige Lösungen sind jedoch konstruktiv sehr aufwendig und daher auch kostenintensiv.

Aus der Druckschrift US 4,575,361 ist eine Ausführung einer geteilten Gelenkgabel vorbekannt, wobei die Teilung im Bereich der Lagerteile und damit der Lagerbohrung erfolgt. Zur Abstützung der Radiallager sind dabei in der Lagerbohrung Stützflächen vorgesehen, die in Richtung der Umfangskräfte angeordnet sind und sich halbkreisförmig über den gesamten Flächenbereich der Innenfläche der Lagerbohrung erstrecken. In den Senkrecht dazu liegenden Flächenbereichen sind Ausnehmungen vorgesehen, in denen Mittel zur Zentrierung bei der Positionierung der Lagerung vorgesehen sind. Die Einarbeitung der Ausnehmung in diesem Bereich erfolgt aus Fertigungsgründen.

Der Erfindung liegt daher die Aufgabe zugrunde, eine Lösung zur Realisierung einer möglichst gleichmäßigen Lastverteilung auf die Lageranordnung zur Lagerung von Zapfen von Zapfenkreuzen in Gelenkgabeln von Gelenkwellen zu entwickeln, welche durch einen einfachen Aufbau sowie eine geringe Anzahl von Bauteilen charakterisiert ist. Des weiteren soll die vorgeschlagene Lösung sich durch einen geringen fertigungstechnischen Aufwand sowie niedrige Kosten auszeichnen.

Die erfindungsgemäße Lösung ist durch die Merkmale von Anspruch 1. Vorteilhafte Ausgestaltungen sind in den Unteransprüchen wiedergegeben.

Die Gelenkgabel für den Einsatz in Gelenkwellen umfasst wenigstens einen Fußteil zum Anschluss an ein antriebseitiges oder abtriebseitiges Maschinenelement und wenigstens einen Lagerteil, mit einer Lagerbohrung zur Lagerung eines Zapfens einer Zapfenkreuzanordnung. Die Lagerbohrung bildet dabei eine Stützfläche für wenigstens einen Teil einer Wälzlageranordnung zur Lagerung eines Zapfens von Zapfenkreuzen, Erfindungsgemäß weist die Stützfläche wenigstens im Bereich der im montierten Zustand bei Drehmomentenübertragung am höchsten beanspruchten Wälzkörper der Wälzlageranordnung örtliche Ausnehmungen auf.

Die Lage und/oder das Profil der Ausnehmungen wird dabei vom Belastungsfall bestimmt, welcher durch wenigstens eine der nachfolgend genannten Größen charakterisierbar ist:
a) Höhe der zu übertragenden Kraft und/oder
b) Geometrie der Lageranschlusselemente, insbesondere Zapfenkreuz, Gelenkgabel und/oder
c) Verformungen bzw. Verformungswege unter Last, insbesondere der Lageranschlusselemente Gelenkgabel und Zapfenkreuz sowie der Einzelelemente der Lageranordnung, insbesondere Wälzkörper und/oder
d) Lagerspiel.

Die Ausnehmungen erstrecken sich parallel zur Zapfenachse des Zapfens, und ihre Abmessung verringert sich in Richtung der Gelenkachse der Gelenkgabel hinsichtlich der Tiefe und der Erstreckung in Umfangsrichtung der Lagerbohrung.

Durch die erfindungsgemäße Lösung wird es möglich, daß bei Leistungsübertragung die Radialkräfte nahezu gleichmäßig vom in der Gelenkgabel gelagerten Zapfenkreuz in die Lageranordnung eingeleitet werden und auf die Lageranschlußelemente, das heißt die Gelenkgabel, übertragen werden. Die Lagerbohrung der Gelenkgabel, welche im Lagerteil der Gelenkgabel eingearbeitet ist, erfährt dabei eine erhebliche Entlastung, welche bei circa 40 % liegt. Die einzelnen Wälzkörper erfahren unter dem Einfluß der Umfangskraft in Umfangsrichtung bei Verformung des Zapfenkreuzes und mit dem Einfluß der Umfangskraft ein nahezu gleichmäßiges Aufliegen an der äußeren Laufbahn, was zu einem gleichmäßigen Abwälzen und damit einer gleichmäßigen Kraftübertragung auf das die äußere Laufbahn tragende Element und das an dieses sich anschließende Element ermöglicht.

Die erfindungsgemäße Lösung zeichnet sich des weiteren durch einen geringen konstruktiven und fertigungstechnischen Aufwand aus. Die mit dieser Lösung erzielbare Lebensdauererhöhung für die Lageranordnungen durch Schaffung einer Stützfläche zur gleichmäßigen Lastverteilung an den Wälzkörpern beträgt circa 40 %. Der bei konventionellen Ausführungen mit einer parallelen Stützfläche zum Außenumfang der Lageranordnung ansonsten entstehender Abrieb wird durch das Vorsehen von örtlichen Ausnehmungen in der Stützfläche in den Bereichen, welche der Abstützung der Wälzelemente beziehungsweise Wälzkörper, welche am höchsten belastet werden, dient, wird vermieden, da in diesem Bereich die an der Stützfläche wirksam werdenden Kräfte unter anderem durch Verformung reduziert werden.

Die erfindungsgemäße Lösung ist für Gelenkgabeln anwendbar, welche einteilig oder mehrteilig ausgeführt sind. Im erstgenannten Fall umfaßt die Gelenkgabel einen Fußteil und zwei Lagerteile mit jeweils einer Lagerbohrung. Im zweiten Fall umfaßt jede Gelenkgabelhälfte einen Fußteil und einen Lagerteil, wobei die beiden Gelenkgabelhälften in axialer und/oder radialer Richtung miteinander verbindbar sind.

Vorzugsweise werden in Abhängigkeit der theoretisch zu erwartenden Belastung die Ausnehmungen in der Stützfläche in Einbaulage im Betriebszustand betrachtet bei Drehmomentenübertragung in den in Umfangsrichtung weisenden Flächenbereichen der Stützfläche angeordnet.

In einer weiteren vorteilhaften Ausführung erfolgt die Anordnung der örtlichen Ausnehmungen in der Stützfläche symmetrisch bezogen auf die Zapfenachse des in der Gelenkgabel gelagerten Zapfens eines Zapfenkreuzes und/oder symmetrisch bezogen auf eine Ebene, welche durch die Gelenkachse und die Zapfenachse des in der Gelenkgabel gelagerten Zapfens beschreibbar ist. Die symmetrische Ausführung der Stützfläche ermöglicht den Einsatz in einer Gelenkwelle unabhängig von der gewünschten Rotationsrichtung der Gelenkwelle, worauf in diesem Fall beim Einbau der Gelenkgabeln nicht geachtet werden muß.

Für die Ausführung der örtlich in der Stützfläche vorzunehmenden Ausnehmungen bestehen eine Vielzahl von Möglichkeiten. Die Ausnehmung kann dabei durch wenigstens eine der nachfolgend genannten Größen beschrieben werden:
a) Profil der Ausnehmung parallel zur Zapfenachse des in der Gelenkgabel zu lagernden Zapfens in Richtung zur Gelenkachse hin betrachtet in einer Ebene, welche senkrecht zur Ebene, die sich durch die Gelenkachse und die Zapfenachse beschreiben läßt, ausgerichtet ist und/oder
b) Erstreckung der Ausnehmung in Richtung zur Gelenkachse parallel zur Zapfenachse betrachtet und/oder
c) Erstreckung der Ausnehmung in radialer Richtung bezüglich der Zapfenachse in Einbaulage des Zapfens betrachtet, insbesondere in Umfangsrichtung der Stützfläche und/oder
d) Änderung des Profils über die Erstreckung in Richtung zur Gelenkachse parallel zur Zapfenachse und/oder
e) Änderung in Richtung der Erstreckung der Ausnehmung in Umfangsrichtung.

Das Profil wiederum ist durch die Profiltiefe, die Profilbreite und die Form charakterisiert. Vorzugsweise werden Profilverläufe erzeugt, die sich auf einfache Art und Weise mit möglichst einem Arbeitsgang herstellen lassen. Erfindungsgemäß verringert sich dabei die Profilbreite und die Profiltiefe von der Außenfläche der Gelenkgabel in Richtung der Gelenkachse parallel zur Zapfenachse des in der Gelenkgabel gelagerten Zapfens betrachtet. Mit dieser Ausführung werden die besonders hohen Belasungen auf die im Bereich der Außenfläche der Gelenkgabel angeordneten Lagerteile drastisch reduziert.

In einer Welterentwicklung ist es vorgesehen, die Oberfläche der Stützfläche einer speziellen Oberflächenbehandlung zu unterziehen. Diese Oberflächenbehandlung dient der Beeinflussung der mechanischen Eigenschaften des Bauelementes Gelenkgabel im Bereich der Lagerbohrung.

Gemäß einem weiteren Aspekt der Erfindung ist es vorgesehen, die Stützfläche beziehungsweise einen Teil der Stützfläche mit einer Perforation zu versehen. Dadurch wird die Stützstruktur in ihrer Gesamtheit elastisch oder plastisch verformbar, so daß die Kraftspitzen durch Verformungsarbeit abgebaut werden.

Vorzugsweise wird eine Ausführung der Ausnehmung gewählt, welche mit möglichst wenig Arbeitsaufwand, das heißt wenigen Bearbeitungsschritten aus der bereits vorhandenen Lagerbohrung erzeugt werden kann. Als mögliche Arbeitsverfahren gelangen dabei die nachfolgend genannten zum Einsatz:
- Schleifen
- Fräsen
- die Verwendung von CNC-Spindeln, für die eine von der Kreisgeometrie abweichende Geometrie programmiert wird
- Erosion, insbesondere Funkenerosion
- Verdichten
- Auftragen von Beschichtungsmaterial, beispielsweise Verchromung
- Schaben
- Perforieren

Im einfachsten Fall wird lediglich die zur Erzeugung der Lagerbohrung eingesetzte Werkzeugspindel zur Erzeugung der Ausnehmung in Umfangsrichtung um einen bestimmten Winkel um die Zapfenachse des in der Gelenkgabel zu lagernden Zapfens eines Zapfenkreuzes, welche der theoretischen Mittenachse der Lagerbohrung entspricht, geneigt und der Bearbeitungsvorgang noch einmal durchgeführt.

Die erfindungsgemäße Lösung ist des weiteren für jegliche Ausführung von Gelenkgabeln geeignet. Dabei ist es unerheblich, ob die Lagerbohrung durchgängig gestaltet ist oder aber eine geschlossene Ausführung aufweist, das heißt, daß die Lagerbohrung lediglich in die Gelenkgabel als Blindbohrung eingearbeitet ist.

Entsprechend einem weiteren Lösungsansatz ist die örtliche Ausnehmung bereits am Außenring des Radiallagers im Bereich der bei Drehmomentübertragung höchst beanspruchten Wälzelemente eingearbeitet.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung eine erfindungsgemäß gestaltete Gelenkgabelhälfte mit einer Ausnehmung in der Stützfläche;
- Fig.2a und 2b: verdeutlichen einander gegenübergestellt die Problematik der ungleichmäßigen Beanspruchung der Wälzkörper bei Drehmomentenübertragung in Umfangsrichtung betrachtet für eine konventionelle Lagerausführung aus dem Stand der Technik mit zylindrischen, das heißt parallel zueinander ausgeführten Laufflächen und die sich einstellende Kraftverteilung für den Einsatz in Schwergelenkwellen sowie die sich einstellende Kraftverteilung an einer erfindungsgemäß gestalteten Lagerbohrung;
- Figur 3: verdeutlicht in schematisch vereinfachter Darstellung anhand einer Schnittdarstellung durch eine Gelenkgabelhälfte ein bevorzugtes Verfahren zur Herstellung der Stützkonstruktion.

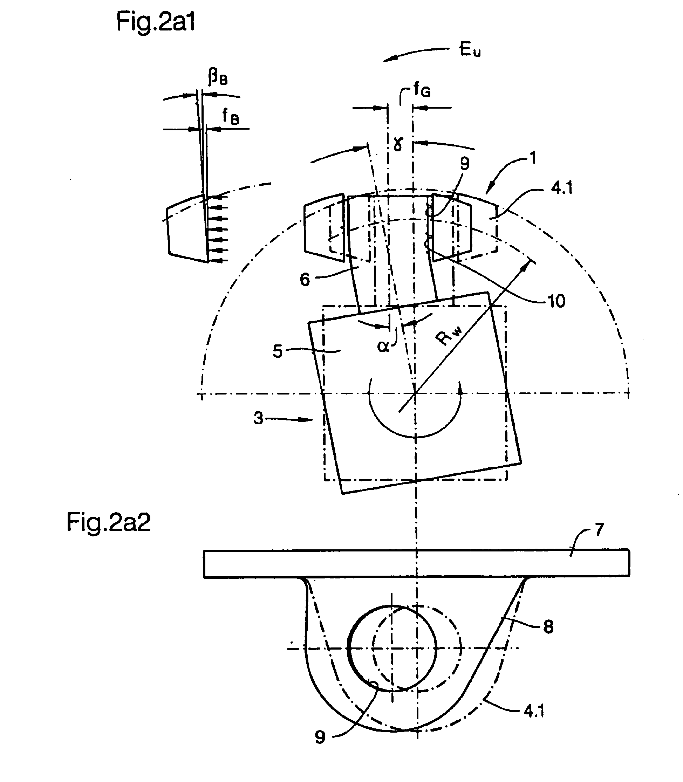

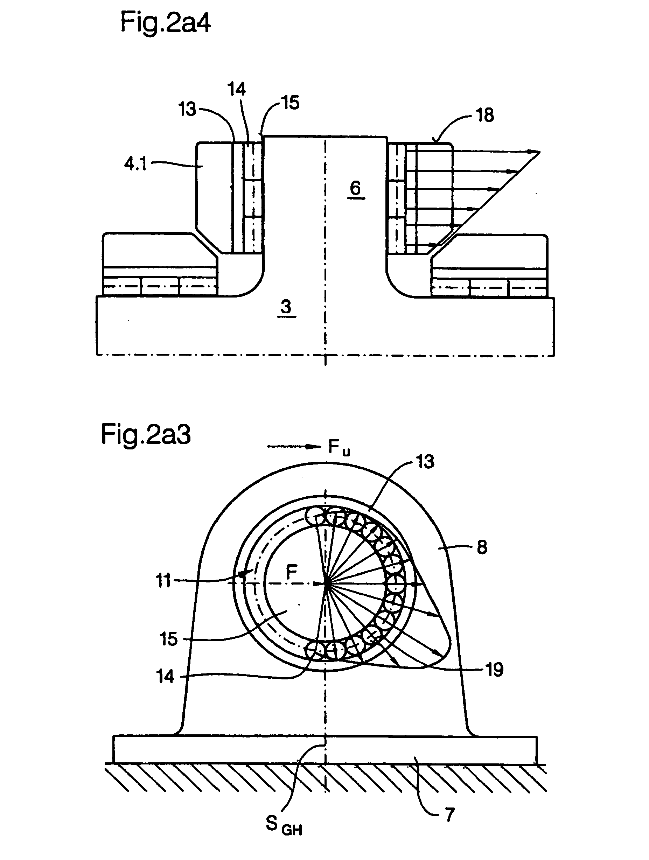

Die Figuren 2a1 bis 2a4 verdeutlichen in schematisch vereinfachter und nicht maßstäblicher Darstellung die sich bei einer konventionellen Ausführung einer Gelenkgabel mit zylindrischer Stützfläche in der Lagerbohrung einstellende Verformungen und damit die Kraftverteilung in der Lageranordnung. Dazu ist ein Ausschnitt aus einer Kreuzgelenkanordnung 1 für eine Zapfenlagerung 2 in Einbaulage in einer Schnittdarstellung durch ein in der Gelenkgabel 4 gelagertes Zapfenkreuz 3 in einer durch die Zapfenachse Z1 und einer senkrechten zur Gelenkachse G beschreibbaren Ebene nicht maßstäblich dargestellt. Die Figuren 2a1 und 2a2 verdeutlichen dabei lediglich die Lagerung eines Zapfens 6 der Zapfenanordnung 5 in einer ersten Gelenkgabelhälfte 4.1 der Gelenkgabel. Mit strichpunktierten Linien sind dabei die Ausgangslagen ohne Belastung der einzelnen Lageranschlußelemente Zapfenkreuz 3 und Gelenkgabelhälfte 4.1 dargestellt. Die durchgängigen Linien verdeutlichen die sich unter dem Einfluß der Umfangskraft einstellenden Verformungen an den Lageranschlußelementen Zapfenkreuz 3 und Gelenkgabelhälfte 4.1. Die Gelenkgabelhälfte 4.1 umfaßt einen Fußteil 7 und einen Lagerteil 8, in welchem eine Lagerbohrung 9 angeordnet ist. Die Lagerbohrung 9 bildet dabei eine Stützfläche 10 zur Abstützung wenigsten eines Teiles einer, hier im einzelnen nicht dargestellten Wälzlageranordnung zur Lagerung des Zapfens 6 des Zapfenkreuzes 3 in der Lagerbohrung 9 der Gelenkgabelhälfte 4.1. Die aufgrund des Neigungswinkels α der Zapfenbiegelinie sich einstellende Schrägstellung β_{B} der Lagerbohrung bewirkt, daß die einzelnen Elemente der hier im einzelnen nicht dargestellten Wälzlageranordnung, weiche in der Lagerbohrung 9 zur Lagerung des Zapfens 6 vorgesehen ist, nicht in entsprechender Weise parallel zueinander unter Belastung geführt werden können, sondern eine Neigung der laufbahntragenden Elemente der Lageranordnung und damit der Wälzkörper erfolgt. Unter dem Einfluß der Umfangskraft kommt es des weiteren zu einer Verschiebung f_{B} der Lagerbohrung 9. Der Gesamtweg der sich einstellenden Verschiebungen ist mit f_{G} gekennzeichnet. γ gibt in der Figur 2a den Gesamtverdrehwinkel an.

Die aus diesen dargestellten Verformungen resultierenden Kraftverteilungen für die Wälzlageranordnung 11 sind in den Figuren 2a3 und 2a4 in zwei Ansichten wiedergegeben. Die Figur 2a3 verdeutlicht dabei eine Ansicht gemäß der Figur 2a2, während die Figur 2a4 noch einmal die Ansicht gemäß der Figur 2a1 jedoch mit dargestellter Wälzlageranordnung 11 und einem Ausschnitt aus dem Zapfenkreuz ohne Gelenkgabelhälfte verdeutlicht.

Die Wälzlageranordnung 11 umfaßt wenigstens ein Radiallager 12 mit jeweils einem Außenring 13, den Wälzelementen 14 und einem Innenring 15. Der Innenring 15 bildet dabei eine erste innere Lauffläche 16 für die Wälzelemente 14, während der Außenring 13 eine zweite äußere Lauffläche 17 für die Wälzelemente 14 bildet. Das Vorhandensein von Innenring 15 beziehungsweise Außenring 13 ist nicht zwingend erforderlich. Denkbar sind auch Ausführungen der Wälzlageranordnung 11, bei welchen die Lageranschlußelemente, im einzelnen das Zapfenkreuz 3 beziehungsweise der Zapfen 6 und die Gelenkgabelhälfte 4.1 als laufbahntragende Elemente fungieren.

Aus den Figuren 2a3 und 2a4 wird ersichtlich, daß unter dem Einfluß der Umfangskraft die sich einstellende Kraftverteilung auf die Wälzelemente 14 der Wälzlageranordnung 11 im Bereich der Außenfläche 18 der Gelenkgabelhälfte 4.1 und in den Flächenbereichen der Stützfläche 10, welche in Umfangsrichtung weisen und die hier mit 19 bezeichnet sind, am größten ist. Die Kräfte ergeben sich dabei aus den auf die Stützfläche 10 wirkenden Druckspannungen, die wiederum durch die Axiallast, Biegung und Radiallast bestimmt werden. Die Umfangskraft oder Tangentialkraft auf die Wälzelemente 11 in Richtung der Stützfläche 10 sind in diesen Bereichen am größten, während in Umfangsrichtung betrachtet am, bezogen auf die Symmetrieachse S_{GH} der Gelenkgabelhälfte 4.1, welche senkrecht zur Lagerbohrungsachse, welche der Zapfenachse Z1 des in der Lagerbohrung 9 gelagerten Zapfens 6 der Zapfenanordnung 5 entspricht, verläuft, symmetrisch angeordnet sind, ein Abheben der Wälzelemente 14 zu beobachten ist. Dieses nicht flächige Anliegen der Wälzelemente 14 an den Laufbahnen beziehungsweise den die Laufbahnen für die Wälzelemente 14 bildenden Elementen, insbesondere dem Außenring 13 und dem Innenring 15 führt zu einer Minderung der Tragfähigkeit der gesamten Wälzlageranordnung 11. Die ungleichmäßigen Belastungen auf die Lageranschlußelemente, insbesondere den Lagerteil 8 der Gelenkgabelhälfte 4.1 führen zu entsprechenden Ermüdungserscheinungen in den hoch belasteten Bereichen.

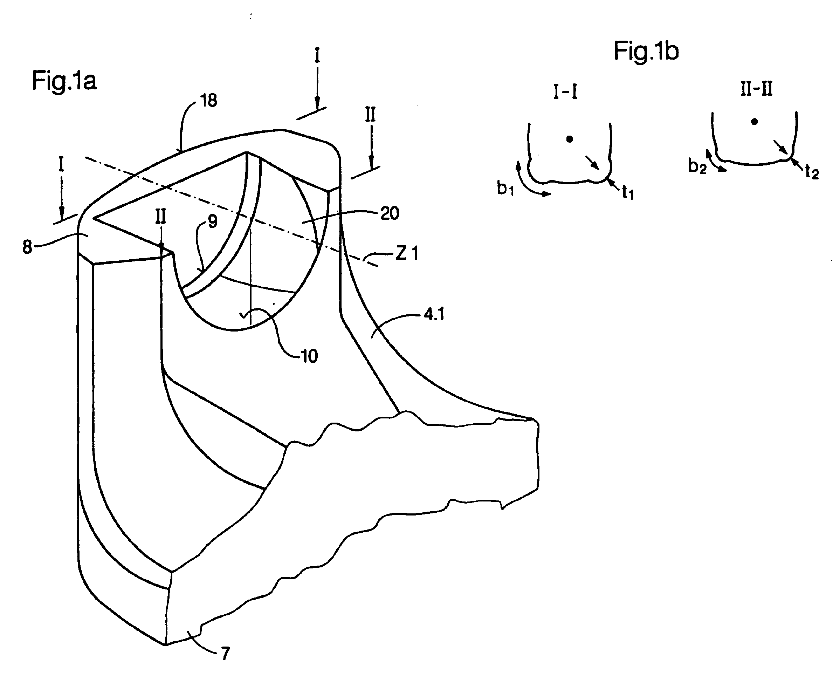

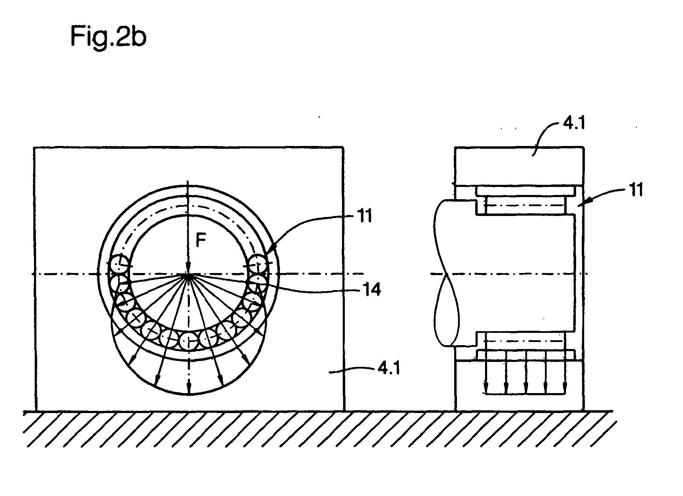

Erfindungsgemäß wird daher vorgeschlagen, die Stützfläche 10, welche von der Lagerbohrung 9 gebildet wird, örtlich in den Bereichen, welche die höchstbelasteten Wälzelemente 14 der Wälzlageranordnung 11 abstützen, mit Ausnehmungen 20 zu versehen. Aus Gründen der Verdeutlichung ist die Gelenkgabelhälfte 4.1 am dargestellten Fall geschnitten wiedergegeben, während die in die Stützfläche 10 eingearbeitete örtliche Ausnehmung 20 doppelt schraffiert wiedergegeben ist. Daraus wird ersichtlich, daß die örtliche Ausnehmung 20 sich im wesentlichen von der Außenfläche 18 der Gelenkgabelhälfte 4.1 in Richtung der Gelenkachse parallel zur Zapfenachse Z1 erstreckt, vorzugsweise wie in der Figur 1a wiedergegeben über die gesamte Erstreckung der Lagerbohrung 9 in Richtung parallel zur Zapfenachse Z1. Des weiteren erstreckt sich die Ausnehmung 20 in Umfangsrichtung, das heißt in radialer Richtung bezogen auf die Zapfenachse Z1 betrachtet in der Lagerbohrung 9. Die Erstreckung in Umfangsrichtung erfolgt dabei über die Erstreckung in Richtung zur Gelenkachse G parallel zur Zapfenachse Z1 mit unterschiedlicher Größe. Entsprechend der sich gemäß den Figuren 2a3 und 2a4 bei einer konventionellen Ausführung mit zylindrischer Lagerbohrung 9 darstellenden Belastung weist die Ausnehmung 20 im Bereich der Außenfläche 18 der Gelenkgabelhälfte 4.1 in der Lagerbohrung 9 die größten Abmessungen hinsichtlich der Tiefe t und der Erstreckung in Umfangsrichtung, hier als Breite b bezeichnet, auf. In Richtung der Gelenkachse verringern sich dabei diese Abmessungen. Die mit dieser Stützkonstruktion erzielbare Kraftverteilung in der Lagerbohrung ist in den Figuren 2b1 und 2b2 dargestellt.

Die Figur 1b verdeutlicht anhand einer Schnittdarstellung dabei anhand zweier Ansichten |-| und ∥-∥ einander gegenübergestellt, die Änderung des Profilverlaufes der Ausnehmung 20 in Richtung der Gelenkachse G parallel zur Zapfenachse Z1 ausgehend von der Außenfläche 18 der Gelenkgabelhälfte 4.1 betrachtet. Daraus wird ersichtlich, daß die Profilbreite b1 und die Profiltiefe t1 im Bereich der Außenfläche 18 der Gelenkgabelfläche 4.1 erheblich größer ausgeführt sind, als im Bereich der Innenfläche 22 der Gelenkgabelhälfte 4.1. Die Abmessungen in diesem Bereich sind mit b2 und t2 bezeichnet.

Die in den Figuren 1a und 1 b dargestellte Ausführung einer Ausnehmung 20 stellt eine bevorzugte Ausgestaltung dar. Die erfindungsgemäße Lösung ist jedoch nicht an diese Ausführung gebunden. Denkbar sind Modifikationen in der Profildarstellung, insbesondere hinsichtlich der Form des Profils der Ausnehmung und/oder der Auslegung des Profils hinsichtlich seiner Breite, Tiefe und Länge, das heißt Erstreckung in Richtung zur Gelenkachse G parallel zur Zapfenachse Z1 des in der Gelenkgabelhälfte 4.1 gelagerten Zapfens. Die konkrete Ausgestaltung der Ausnehmung 20 hängt dabei vom konkreten Einsatzfall ab und liegt im Ermessen des zuständigen Fachmannes. Die Größe der örtlichen Ausnehmung in der Stützfläche wird dabei durch wenigstens eine der nachfolgend genannten Größen, vorzugsweise jedoch die Kombination der einzelnen Größen bestimmt:
- Höhe der zu übertragenden Kraft
- Geometrie der Lageranschlußelemente, Lagergehäuse beziehungsweise Gelenkgabelhälfte und Zapfenkreuz
- Verformung der Lageranschlußelemente unter Last, insbesondere der Gelenkgabelhälfte, des Zapfenkreuzes sowie der Wälzelemente beziehungsweise der die Laufflächen für die Wälzelemente tragenden Elemente
- Lagerspiel

Die erfindungsgemäße Lösung des Vorsehens von örtlichen Ausnehmungen in der Stützfläche der Lagerbohrung weicht dabei erheblich von der normalerweise geforderten exakten Lagerbohrungs-bzw. Kreisgeometrie ab. Das in die Stützfläche eingearbeitete Profil der Ausnehmung überdeckt dabei circa 1/10 bis 5/10 der Stützfläche. Die konkrete Lage in Umfangsrichtung der Lagerbohrung betrachtet, sowie die konkrete Ausgestaltung des Profils hinsichtlich Form, Tiefe, Breite und Länge werden vom Belastungsfall bestimmt, welcher durch die oben genannten Größen beschreibbar ist.

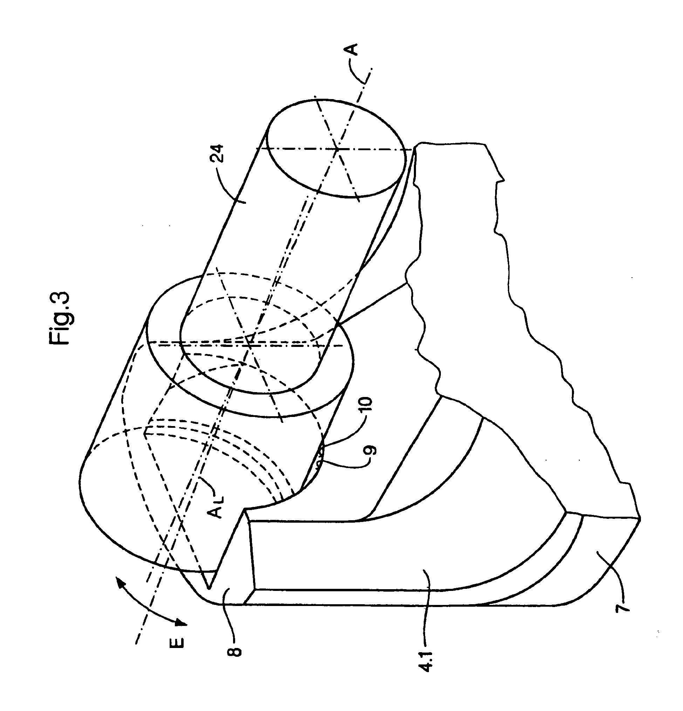

Die Figur 3 verdeutlicht in schematisch vereinfachter Darstellung anhand eines Ausschnittes aus einer Gelenkgabelhälfte 4.1, welche in Schnittdarstellung wiedergegeben ist, das Zusammenwirken mit einem Werkzeug 23 zur Bearbeitung der Lagerbohrung 9, insbesondere der Stützfläche 10 zur Einarbeitung der erfindungsgemäß vorzusehenden Ausnehmungen 20. Die Einarbeitung der Ausnehmungen 20 erfolgt dabei durch das Zusammenwirken einer Werkzeugspindel 24 mit der Lagerbohrung 9. Die Werkzeugspindel 24 weist dabei einen Durchmesser d auf, welcher dem Durchmesser der Lagerbohrung entspricht. Mit dieser Werkzeugspindel 24 kann bereits auch die Lagerbohrung in die Gelenkgabelhälfte 4.1 eingearbeitet werden. Die Einarbeitung der Lagerbohrung erfolgt dabei durch Führung der Werkzeugspindel 24 mit seiner Achse A entsprechend der theoretisch bei zylindrischer Ausführung der Lagerbohrung 9 zugehörigen Lager- bzw. Mittenachse A_{L}, welche der Zapfenachse Z1 des in der Gelenkgabel gelagerten Zapfens entspricht. Die Einarbeitung der Ausnehmung 20 in die Stützfläche 10, welche durch die Lagerbohrung 9 gebildet wird, erfolgt dann durch Neigung der Achse der Werkzeugspindel A gegenüber der theoretischen Mittenachse der Lagerbohrung 9, welche in Einbaulage des Zapfens der Zapfenachse Z1 des in der Gelenkgabel gelagerten Zapfens entspricht. Der Neigungswinkel E bestimmt dabei entsprechend seiner Größe und Richtung bezogen auf eine Ebene E, die sich durch die Zapfenachse Z1 des in der Gelenkgabelhälfte 4.1 theoretisch gelagerten Zapfens und die Gelenkachse G, welche der Symmetrieachse beziehungsweise Rotationsachse der Gelenkwelle entspricht, beschreiben läßt, die Lage und Größe der in der Stützfläche 10 der Lagerbohrung 9 erzeugten Ausnehmung 20 und dementsprechend die Verbesserung der Kraftverteilung in der Wälzlageranordnung unter Last gegenüber einer konventionell ausgeführten Lageranordnung, insbesondere Lagerbohrung 9 mit zylindrischer Stützfläche.

Vorzugsweise erfolgt die Nachbearbeitung der Lagerbohrung 9 durch Fräsen. Denkbar sind jedoch auch andere Bearbeitungsverfahren, wie beispielsweise Schleifen, Erosion, Verdichten, insbesondere Schlagverdichten, Schaben sowie Perforieren, wobei im letztgenannten Fall durch das Vorsehen einer Perforation die Stützstruktur elastisch oder plastisch verformbar gestaltet werden kann.

### Bezugszeichenliste

- 1: Kreuzgelenkanordnung
- 2: Zapfenlagerung
- 3: Zapfenkreuz
- 4: Gelenkgabel
- 4.1: Gelenkgabelhälfte
- 5: Zapfenanordnung
- 6: Zapfen
- 7: Fußteil
- 8: Lagerteil
- 9: Lagerbohrung
- 10: Stützfläche
- 11: Wälzlageranordnung
- 12: Radiallager
- 13: Außenring
- 14: Wälzelemente
- 15: Innenring
- 16: Erste innere Lauffläche
- 17: Zweite äußere Lauffläche
- 18: Außenfläche der Gelenkgabelhälfte
- 19: Flächenbereich
- 20: Ausnehmung
- 21: Profil
- 22: Innenfläche der Gelenkgabelhälfte
- 24: Werkzeugspindel
- Z1: Zapfenachse des in der Gelenkgabelhälfte gelagerten Zapfens
- G: Gelenkachse
- Fᵤ: Umfangskraft
- A: Achse der Werkzeugspindel
- α: Neigungswinkel der Zapfenbiegelinie
- β_{B}: Schrägstellung der Lagerung
- γ: Gesamtverdrehwinkel
- E: Winkel zwischen Mittenachse der Lagerbohrung und Symmetrieachse der Werkzeugspindel
- f_{B}: Verschiebung der Lagerbohrung
- f_{G}: Gesamtweg der Verschiebung

## Patentansprüche

1. Gelenkgabel (4) für den Einsatz in Gelenkwellen;
mit wenigstens einem Lagerteil (8) umfassend eine Lagerbohrung (9) mit einer Stützfläche (10) zur Abstützung eines Zapfens (6) eines im Lagerteil (8) gelagerten Zapfenkreuzes (3);
die Stützfläche (10) weist örtliche Ausnehmungen (20) auf, die sich parallel zur Zapfenachse (Z1) des Zapfens (6) erstrecken;
in Richtung der Gelenkachse der Gelenkgabel (4) verringert sich die Abmessung der Ausnehmung (10) hinsichtlich der Tiefe (t) und der Erstreckung in Umfangsrichtung der Lagerbohrung (9).

2. Gelenkgabel (4) nach Anspruch 1, **dadurch gekennzeichnet, dass** die Ausnehmung (20) sich in Einbaulage parallel zur Zapfenachse (Z1) des in der Lagerbohrung (9) gelagerten Zapfens (6) in Richtung zur Gelenkachse (G) hin über die gesamte Erstreckung der Lauffläche erstreckt.

3. Gelenkgabel (4) nach einem der Ansprüche 1 und 2, **dadurch gekennzeichnet, dass** die Stützfläche (10) und/oder die durch die Ausnehmung (20) beschreibbare Fläche der Stützfläche (10) oberflächenbehandelt sind.

## Claims

1. A joint yoke (4) for use in a cardan shafts;
comprising at least one bearing part (8) comprising a bearing bore (9) with a support surface (10) for supporting a journal (6) of a spider (3) held in the bearing part (8);
the support surface (10) comprising local recesses (20) extending parallel to the journal axis (Z1) of the journal (6);
the dimension of the recess (10) decreasing in the direction of the joint axis of the joint yoke (4) with respect to depth (t) and extension in the circumferential direction of the bearing bore (9).

2. A joint yoke (4) according to claim 1, **characterized in that** the recess (20), in the installed position, extends parallel to the journal axis (Z1) of the journal (6) held in the bearing bore (9) in the direction towards the joint axis (G) over the entire extension of the bearing surface.

3. A joint yoke (4) according to one of the claims 1 and 2, **characterized in that** the support surface (10) and/or the surface of the support surface (10) which can be described by the recess (20) are surface-treated.

## Revendications

1. Fourche d'articulation (4) pour la mise en oeuvre dans des axes d'articulation
ayant au moins une partie de support (8) comprenant un alésage de palier (9) avec une surface d'appui (10) en vue de l'appui d'un pivot (6) d'un croisillon de pivot (3) placé dans la pièce d'appui;
la surface d'appui (10) possède des cavités (20) locales qui s'étendent d'une manière parallèle à l'axe des pivots (Z1) du pivot (6);
dans la direction de l'axe d'articulation de la fourche d'articulation (4), la dimension de la cavité (10) va en diminuant en ce qui concerne la profondeur (t) et l'extension, dans la direction du pourtour de l'alésage de palier (9).

2. Fourche d'articulation (4) selon la revendication 1, **caractérisé en ce que** la cavité (20) s'étend en position de montage, parallèlement à l'axe du pivot (Z1) placé dans l'alésage de palier (9) dans la direction de l'axe de l'articulation (9) sur la totalité de l'étendue de la surface de roulement.

3. Fourche d'articulation (4) selon l'une des revendications 1 et 2, **caractérisé en ce que** la surface d'appui (10) et/ou les surfaces que peuvent être inscrites dans la cavité (20), de la surface d'appui (10), sont traitées en surface.
